# EUROPÄISCHE PATENTSCHRIFT

(11) **EP 0 626 522 B1**
(45) Veröffentlichungstag und Bekanntmachung des Hinweises auf die Patenterteilung: **08.01.1997**
(21) Anmeldenummer: 94105225.0
(22) Anmeldetag: 02.04.1994
(51) Int. Cl.: F16B 37/08

(54) **Kippdübel**
Toggle fastener
Cheville à bascule

(30) Priorität: 18.05.1993 DE 4316559; 09.06.1993 DE 4319114
(43) Veröffentlichungstag der Anmeldung: 30.11.1994
(73) Patentinhaber: fischerwerke Artur Fischer GmbH & Co. KG, D-72178 Waldachtal (DE)
(72) Erfinder: Hengesbach, Wolfgang, Dipl.-Ing., D-72280 Dornstetten (DE)

(56) Entgegenhaltungen:
- DE-A- 1 914 110
- FR-A- 2 241 212
- FR-A- 2 410 168
- GB-A- 486 176
- US-A- 2 285 273

## Beschreibung

Die Erfindung betrifft einen Kippdübel gemäß Oberbegriff des Anspruches 1.

Um Gegenstände, wie Lampen, Blumenampeln oder dgl., an abgehängten Decken oder an sonstigen Hohlraum-Decken befestigen zu können, sind Kippdübel bekannt, die im wesentlichen aus einer Gewindestange und einem daran kippbar befestigten Halteteil bestehen. Das Halteteil kann als einteiliger oder zweiteiliger Bügel ausgebildet sein, dessen Schwenklager auf die Gewindestange aufgeschraubt ist. Die Befestigung des Kippdübels erfolgt in der Weise, daß der zunächst parallel zur Gewindestange ausgerichtete Bügel in die Bohrung einer Decke eingeschoben wird, bis der Bügel sich im Hohlraum befindet und in eine waagerechte Position verschwenken kann. Nun ist es erforderlich, den Kippdübel mittels einer zuvor auf die Gewindestange aufgeschraubten Schraubenmutter an der Decke zu verspannen. Zu diesem Zweck wird die Schraubenmutter gegen eine Unterlagscheibe nach oben gedreht, bis die Unterlagscheibe fest an der Decke anliegt. Mit einer Kontermutter kann jetzt die Schraubverbindung noch gesichert werden.

Bei derartigen Kippdübeln müssen die zur Befestigung erforderlichen Schraubenmuttern vor der Montage zunächst in eine geeignete Position gebracht werden, damit das Verschwenken des Bügels nicht behindert wird. Ist der Kippdübel als sogenannter Deckenhaken ausgebildet, d. h. daß an seinem unteren Ende die Gewindestange in einen angeformten Deckenhaken übergeht, so muß der gerade Gewindeteil eine ausreichende Länge haben, damit die erforderliche Distanz zwischen den Schraubenmuttern und dem schwenkbaren Bügel bei der Montage realisierbar ist.

US-A-2 285 273 beschreibt ein Halteelement für einen Kippdübel, das eine Schraube während der Befestigung vorübergehend hält. Das Halteelement ist mit einem Schlitz versehen, damit es auf das Gewinde geschoben werden kann. Kurz bevor die Klemmwirkung des Schraubenkopfes anfängt, wird das Halteelement entfernt. Für eine Dauerbefestigung ist dieses Halteelement nicht geeignet.

Der Erfindung liegt die Aufgabe zugrunde, einen Kippdübel zu schaffen, bei dem anstelle der Schraubenmuttern ein Befestigungsteil verwendet wird, welches die Montage gegenüber herkömmlichen Kippdübeln erleichtert.

Die Lösung dieser Aufgabe erhält man durch die im Anspruch 1 angegebenen Merkmale. Das Befestigungsteil besteht aus einem längsgeschlitzten Kegelstumpf mit einer axial verlaufenden, auf der Gewindestange klemmend sitzenden Bohrung, wobei das Befestigungsteil im Bereich des Längsschlitzes elastisch auf den Durchmesser der Gewindestange aufweitbar ist, so daß das Befestigungsteil seitlich auf die Gewindestange aufgeklipst werden kann. Dies hat den Vorteil, daß der Kippdübel zunächst ohne das Befestigungsteil in eine Bohrung an der Decke eingeschoben und der schwenkbare Bügel in die waagerechte Position gebracht werden kann. Jetzt kann das Befestigungsteil seitlich auf die Gewindestange unmittelbar unterhalb der Decke aufgeklipst und dann nach oben geschraubt werden, bis der Kegelstumpf sich in der Bohrung an der Decke verspannt und ein unten am Befestigungsteil ausgebildeter Haltebund an der Decke zur Anlage kommt. Die konische Mantelfläche des Kegelstumpfs bewirkt dabei, daß das Befestigungsteil von der in der Decke befindlichen Bohrlochwandung gegen das Gewinde der Gewindestange zusammengedrückt wird. Durch das Verspannen des Befestigungsteils wird dieses gegen unbeabsichtigtes Verdrehen gesichert, insbesondere dann, wenn das Befestigungsteil ein Kunststoffteil ist.

Um das seitliche Aufklipsen auf die Gewindestange zu erleichtern, ist der Längsschlitz des Befestigungsteils zur Mantelfläche hin erweitert. Die Erweiterung kann stufenförmig oder V-förmig ausgebildet sein.

Damit das Befestigungsteil mit einem herkömmlichen Schraubenschlüssel gedreht und an der Decke verspannt werden kann, sind am Haltebund oder an einem nach unten abstehenden Ansatzteil Abflachungen, vorzugsweise in Form eines Außensechskants vorgesehen.

Um für das Befestigungsteil die gewünschte elastische Aufweitbarkeit zu erhalten, ist es sehr vorteilhaft, wenn an der dem Längsschlitz gegenüberliegenden Seite eine Längsnut verläuft, deren Nutengrund nur einen geringen Abstand zur Bohrung hat. Im Bereich des Nutengrunds verbleibt somit nur eine geringe Wandstärke, die das elastische Aufweiten des Befestigungsteils begünstigt.

Ist der Kippdübel an seinem unteren Ende als Deckenhaken ausgebildet, so erhält man gerade bei dieser Ausführung eine besonders große Montageerleichterung gegenüber herkömmlichen Kippdübeln.

Die Erfindung wird anhand von in der Zeichnung dargestellten Ausführungsbeispielen näher erläutert.

Es zeigen:
- Figur 1: den an einer abgehängten Gipskartonplatte befestigten Kippdübel,
- Figur 2: die Seitenansicht mit einer Längsnut eines Befestigungsteils für einen Kippdübel gemäß Figur 1,
- Figur 3: die Draufsicht auf das Befestigungsteil von Figur 2 und
- Figur 4: die gekippte Seitenansicht des Befestigungsteils von Figur 2 im Bereich des Längsschlitzes.

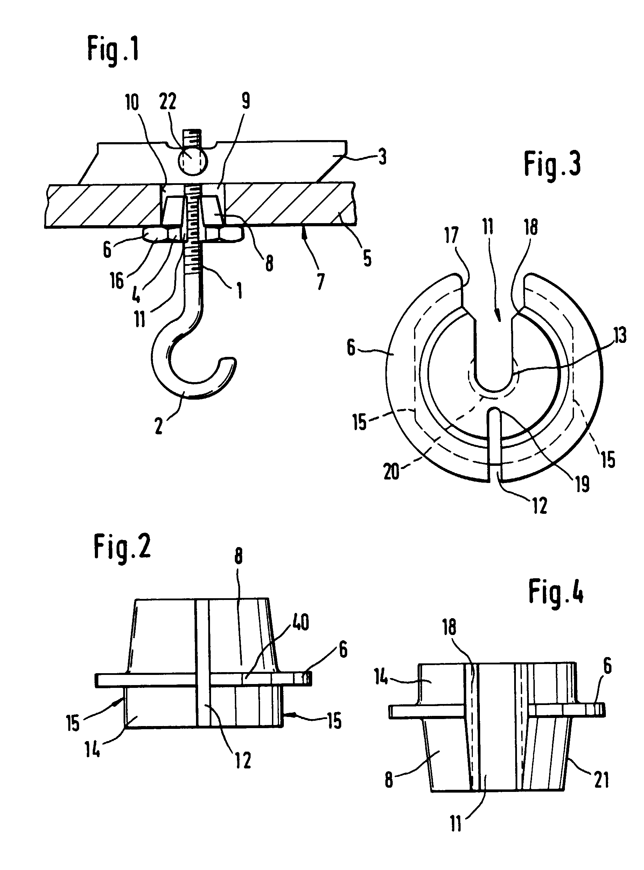

Der in Figur 1 dargestellte Kippdübel besteht aus einer Gewindestange 1, die unten in einen Deckenhaken 2 übergeht, einem kippbaren Bügel 3 und einem Befestigungsteil 4. Der Kippdübel ist an einer Gipskartonplatte 5 einer abgehängten Decke befestigt, wobei der Bügel 3 in der dargestellten waagerechten Position an der Rückseite der Gipskartonplatte 5 anliegt. Das Befestigungsteil 4 ist nach oben in die dargestellte Position geschraubt worden, so daß ein am Befestigungsteil 4 überstehender Haltebund 6 von unten gegen die Decke 7 drückt und mit dieser verspannt ist. Am Haltebund 6 steht nach oben ein Kegelstumpf 8 ab, der in eine Bohrung 9 eingreift und gegen deren Wandung 10 drückt.

Das Befestigungsteil 4 hat einen Längsschlitz 11 und läßt sich somit gegen die Gewindestange 1 von der Wandung 10 zusammendrücken. Die dadurch entstehende Verspannung bewirkt, daß sich das Befestigungsteil 4 nicht unbeabsichtigt löst.

Der schwenkbare Bügel 3 ist über ein Schwenklager 22 mit der Gewindestange 1 schwenkbar verbunden, so daß er bei der Montage in eine zur Gewindestange 1 parallele Position verschwenkbar ist. In dieser parallelen Position läßt sich der Bügel 3 durch die Bohrung 9 einführen, wo er dann in die dargestellte waagerechte Position verschwenkt.

Nachdem dieser erste Montageschritt durchgeführt ist, wird dann das Befestigungsteil 4 seitlich auf die Gewindestange 1 aufgeklipst und nach oben geschraubt, bis sich das Befestigungsteil 4 mit der Gipskartonplatte 5 verspannt hat. Dieser Zustand ist in Figur 1 dargestellt.

Während das Befestigungsteil 4 in Figur 1 von der Seite dargestellt ist, an der sich der Längsschlitz 11 befindet, ist das Befestigungsteil 40 von Figur 2 von der dem Längsschlitz gegenüberliegenden Seite gezeigt. An der hier sichtbaren Seite befindet sich eine Längsnut 12, die fast bis zu einer axial im Befestigungsteil 40 verlaufenden Bohrung 13 (Figur 3) reicht. Das in den Figuren 2 - 4 dargestellte Befestigungsteil 40 weicht gegenüber dem in Figur 1 dargestellten Befestigungsteil 4 dadurch ab, daß bei dem Befestigungsteil 40 ein Ansatzteil 14 nach unten absteht, welches Abflachungen 15 zum Ansetzen eines Schraubenschlüssels hat. Bei dem Befestigungsteil 4 von Figur 1 sind Abflachungen in Form eines Außensechskants 16 an dem Haltebund 6 ausgebildet.

Der Haltebund 6 von Figur 2 dient dagegen ausschließlich als Anschlag, mit dem das Halteteil 40 sich an der Decke 7 verspannt. In der Draufsicht von Figur 3 ist nicht nur die Tiefe der Nut 12 ersichtlich, sondern insbesondere auch ein stufenförmig erweiterter Längsschlitz 11, der grundsätzlich auch V-förmig nach außen erweitert sein könnte. Die Erweiterung 17 dient zusammen mit den Anlaufflächen 18 dazu, daß sich das Halteteil 40 ohne besonders großen Kraftaufwand seitlich auf die Gewindestange 1 aufklipsen läßt.

Die Längsnut 12 ist so weit bis an die Bohrung 13 herangeführt, daß zwischen Nutengrund 19 und Bohrung 13 nur eine verhältnismäßig dünne Wandung 20 verbleibt.

Die Seitenansicht von Figur 4 zeigt den Längsschlitz 11, wobei in dieser gekippten Darstellung das Ansatzteil 14 nach oben und der Kegelstumpf 8 mit seiner konischen Mantelfläche 21 nach unten ragt.

Es wird noch angemerkt, daß die erfindungswesentlichen Elemente nicht ausschließlich auf einen Kippdübel beschränkt sind, wie dieser in Figur 1 dargestellt ist, sondern daß auch anstelle des schwenkbaren Bügels 3 andere Halteteile vorgesehen sein können. Ferner kann die Bohrung 13 als Bohrung ausgebildet - oder wie in Figur 3 und 4 dargestellt - mit längsverlaufenden Rippen 23 versehen sein, um zwischen .Gewindestange 1 und Befestigungsteil 4 eine bessere Verzahnung zu schaffen

## Patentansprüche

1. Kippdübel zur Befestigung an Hohlraum-Decken, der ein an einer Gewindestange (1) angebrachtes, in den Hohlraum einer Decke (7) greifendes Halteteil (3) und ein an der Gewindestange (1) angebrachtes, von unten gegen die Decke (7) verspannbares Befestigungsteil (4) mit durchgehender Bohrung (13) zur Befestigung auf der Gewindestange (1) hat, wobei an der nach unten weisenden Gewindestange (1) ein an der Decke (7) anzubringender Gegenstand befestigbar ist, **dadurch gekennzeichnet**, daß das Befestigungsteil (4) ein mit einem Längsschlitz (11) versehener Kegelstumpf (8) ist, dessen Längsschlitz (11) an seinem Grund in die Bohrung (13) mündet, wobei der Längsschlitz (11) eine geringere Breite als der Durchmesser der Gewindestange (1) hat und zum Aufklipsen auf die Gewindestange (1) elastisch auf den Durchmesser der Gewindestange (1) aufweitbar ist, und daß sich der Kegelstumpf (8) am einen Ende zum Halteteil (3) hin verjüngt und am anderen Ende einen Haltebund (6) hat.

2. Kippdübel nach Anspruch 1, **dadurch gekennzeichnet**, daß der Längsschlitz (11) zur Mantelfläche (21) des Befestigungsteils (4) erweitert ist.

3. Kippdübel nach einem der Ansprüche 1 oder 2, **dadurch gekennzeichnet**, daß an dem Haltebund (6) oder an einem dem Kegelstumpf (8) gegenüberliegend am Haltebund (6) nach unten abstehenden Ansatzteil (14) wenigstens eine Abflachung (15) seitlich ausgebildet ist.

4. Kippdübel nach einem der vorhergehenden Ansprüche, **dadurch gekennzeichnet**, daß der Haltebund (6) oder das Ansatzteil (14) als Außensechskant (16) ausgebildet ist.

5. Kippdübel nach einem der vorhergehenden Ansprüche, **dadurch gekennzeichnet**, daß das Befestigungsteil (4, 40) aus Kunststoff besteht und an der dem Längsschlitz (11) gegenüberliegenden Seite eine Längsnut (12) hat.

6. Kippdübel nach einem der vorhergehenden Ansprüche, **dadurch gekennzeichnet**, daß das untere Ende der Gewindestange (1) in einen angeformten Deckenhaken (2) übergeht.

7. Kippdübel nach einem der vorhergehenden Ansprüche, **dadurch gekennzeichnet**, daß die Bohrung (13) mit längsverlaufenden Rippen (22) versehen ist.

## Claims

1. Toggle plug for fixing to cavity ceilings, which has a retaining member (3) mounted on a threaded rod (1) and engaging in the cavity of a ceiling (7) and a fixing member (4) with a continuous bore (13) for fixing on the threaded rod (1), which fixing member is mounted on the threaded rod (1) and is arranged to be braced against the ceiling (7) from below, wherein an article to be mounted on the ceiling (7) is arranged to be fixed to the downwardly pointing threaded rod (1), characterized in that the fixing member (4) is a truncated cone (8) provided with a longitudinal slit (11), which longitudinal slit (11) opens at its base into the bore (13) and has a width that is smaller than the diameter of the threaded rod (1) and for snapping onto the threaded rod (1) is resiliently expandable to the diameter of the threaded rod (1), and the truncated cone (8) tapers at one end towards the retaining member (3) and at the other end has a supporting collar (6).

2. A toggle plug according to claim 1, characterized in that the longitudinal slit (11) is widened towards the outer surface (21) of the fixing member (4).

3. A toggle plug according to one of claims 1 and 2, characterized in that at least one flat (15) is formed laterally on the supporting collar (6) or on an extension (14) lying opposite the truncated cone (8) and projecting downwards from the supporting collar (6).

4. A toggle plug according to one of the preceding claims, characterized in that the supporting collar (6) or the extension (14) is in the form of a hexagon (16).

5. A toggle plug according to one of the preceding claims, characterized in that the fixing member (4, 40) consists of plastics material and has a longitudinal groove (12) on the side lying opposite the longitudinal slit (11).

6. A toggle plug according to one of the preceding claims, characterized in that the lower end of the threaded rod (1) continues as an integral ceiling hook (2).

7. A toggle plug according to one of the preceding claims, characterized in that the bore (13) is provided with longitudinally running ribs (22).

## Revendications

1. Cheville à bascule destinée à la fixation à des plafonds creux, comprenant une pièce de retenue (3) implantée sur une tige filetée (1) et s'engageant dans la cavité d'un plafond (7), et une pièce de fixation (4) qui est implantée sur la tige filetée (1), peut être bloquée de bas en haut contre le plafond (7) et comporte un perçage ininterrompu (13) en vue de la fixation sur la tige filetée (1), la tige filetée (1), orientée vers le bas, autorisant la fixation d'un objet devant être monté au plafond (7), caractérisée par le fait que la pièce de fixation (4) est un tronc de cône (8) muni d'une fente longitudinale (11) et dont la fente longitudinale (11) débouche, par son fond, dans le perçage (13), la fente longitudinale (11) présentant une largeur plus petite que le diamètre de la tige filetée (1), et pouvant être évasée élastiquement jusqu'au diamètre de la tige filetée (1), en vue de l'enclipsage sur cette tige filetée (1) ; et par le fait que le tronc de cône (8) se rétrécit, à l'une des extrémités, en direction de la pièce de retenue (3), et présente un collet de retenue (6) à l'autre extrémité.

2. Cheville à bascule selon la revendication 1, caractérisée par le fait que la fente longitudinale (11) est évasée vers la surface périphérique (21) de la pièce de fixation (4).

3. Cheville à bascule selon l'une des revendications 1 ou 2, caractérisée par le fait qu'au moins un méplat (15) est ménagé, latéralement, sur le collet de retenue (6) ou sur un appendice (14) faisant saillie vers le bas, sur le collet de retenue (6), à l'opposé du tronc de cône (8).

4. Cheville à bascule selon l'une des revendications précédentes, caractérisée par le fait que le collet de retenue (6) ou l'appendice (14) est réalisé sous la forme d'une configuration extérieure (16) à six pans.

5. Cheville à bascule selon l'une des revendications précédentes, caractérisée par le fait que la pièce de fixation (4, 40) consiste en une matière plastique, et présente une saignée longitudinale (12) du côté opposé à la fente longitudinale (11).

6. Cheville à bascule selon l'une des revendications précédentes, caractérisée par le fait que l'extrémité inférieure de la tige filetée (1) se prolonge par un crochet de suspension (2) façonné d'un seul tenant.

7. Cheville à bascule selon l'une des revendications précédentes, caractérisée par le fait que le perçage (13) est pourvu de nervures (22) à étendue longitudinale.
